# EUROPEAN PATENT APPLICATION

(11) **EP 1 162 562 A1**
(43) Date of publication of application: **12.12.2001**
(21) Application number: 01302713.1
(22) Date of filing: 23.03.2001
(51) Int. Cl.: G06F 17/60

(54) **Membership management method and membership management system**

(30) Priority: 09.06.2000 JP 2000174011
(71) Applicant: FUJITSU LIMITED, Kawasaki-shi, Kanagawa 211-8588 (JP)
(72) Inventor: Kanazawa, Masanobu, c/o Fujitsu Limited, Kawasaki-shi, Kanagawa 211-8588 (JP)
(74) Representative: Fenlon, Christine Lesley

(57) **Abstract**

In order to provide a membership management system and an integrated membership management center (7) that make it possible for users to simplify the management of their user IDs and passwords and also that make it possible for a service provision site to reduce the cost of membership management, the following arrangement is made. When a user makes an application for a registration of membership information to one service provision site, the application-requested service provision site registers at least a part of the membership information into a database held by the service provision site. When this membership information has not yet been registered in a database held by an integrated membership management center (7), the integrated membership management center (7) also registers this membership information into the database (10) held by the integrated membership management center (7).

## Description

The present invention relates to a membership management method and a membership management system.

Previously, to provide added values of services that are exclusively for the members of a service provider, a management system for managing the memberships has been built up at each service provision site. In other words, the membership management processing including the membership registration processing, the membership information database preparation, the membership authentication processing, the membership information alteration processing, the installation of an inquiry window, etc. has been carried out at each service provision site.

Therefore, according to the previously proposed management system, it is necessary to register members at each service provision site.

However, the user IDs and passwords are not prepared in a consistent manner between service provision sites. That is, the user IDs and passwords are prepared as character strings only at certain service provision sites, and they are prepared by only numbers or by the combination of character strings and numbers at other service provision sites. Therefore, according to the previously-proposed system, a member whose user ID and password have been registered at one service provision site cannot necessarily use the same user ID and the password to receive services at other service provision sites. In order to receive services at another service provision site, the member must separately register the membership of this service provision site and receive a separate user ID and a password that can be used at this service provision site. As a result, the user must have a user ID and a password for each service provision site, which makes it complex to manage the user IDs and passwords.

When a user tries to obtain an authentication in order to receive services, for example, the user cannot obtain the authentication if the user has forgotten the user ID or password, or if the user has made an error in the combination of a user ID and a password.

Further, each service provision site must prepare an inquiry window in order to respond to, and provide information to, users who make various inquiries about their passwords or user addresses, for example, when they have forgotten their passwords or when they have changed their user addresses, etc. Such cases have proved to increase the costs of developing this system.

Accordingly, it is desirable to provide a membership management method and a membership management system that allow users to simplify the management of their user IDs and passwords, make it possible for a service provision site to reduce the cost of membership management and allow a user to receive services at many service provision sites by using one user ID and one password.

According to an embodiment of a first aspect of the present invention, there is provided a membership management system wherein when a user makes an application for a registration of membership information to one service provision site by using a user terminal, the application-requested service provision site registers at least a part of the membership information into a database held by the service provision site, and when this membership information has not been yet registered in a database held by an integrated membership management center, the integrated membership management center also registers this membership information into the database held by the integrated membership management center.

According to an embodiment of the above aspect, as the integrated membership management center registers the membership information sent from all the service provision sites, it becomes possible for a user to receive services at all the service provision sites by using one user ID and one password in common. Therefore, the user can decrease the number of IDs and passwords that the user must manage.

Further, according to an embodiment of the above aspect, as it is not necessary to provide an inquiry window at each service provision site, it becomes possible to reduce the system development cost at each service provision site.

According to an embodiment of a second aspect of the present invention, there is provided a membership management system of the first aspect, wherein each service provision site comprises: membership registration guidance display means for urging a user to register membership information; means for guiding the user to obtain, from a user terminal, the membership information that has been input from the user terminal based on the guidance of the membership registration guidance display means; means for requesting the integrated membership management center to register the membership information; means for obtaining from the integrated membership management center the information about whether the requested membership information has already been registered in the integrated membership management center or the integrated membership management center has registered the requested membership information as new registration; and means for posting to the user terminal a user ID and a password that have been authenticated by the integrated membership management center.

Preferably, in such a membership management system the integrated membership management center comprises: means for searching for a record that coincides with user information when this means has received, from a service provision site, a request for registering membership information; means for preparing a user ID and a password and adding these to a database when there is no record that coincides with the
registration-requested membership information as a result of the searching; means for adding a service qualification to the user to enable the user to receive services of the service provision site when there is a record that coincides with the registration-requested membership information as a result of the searching; and means for posting the user ID and the password to the service provision site.

Preferably, in such a membership management system, the membership registration guidance display means urges a user to input items of membership information that are necessary for the integrated membership management center even if these pieces of information are not necessary for the service provision site.

According to an embodiment of a third aspect of the present invention, there is provided an integrated membership management center that is connected to a plurality of service provision sites and to at least one user terminal via a network, the integrated membership management center comprising a database for registering new membership information that a user has used when the user has accessed a service provision site from a user terminal.

Preferably, such an integrated membership management center further comprises: means for searching for a record that coincides with user information when this means has received from a service provision site a request for registering membership information; means for preparing a user ID and a password and adding these to a database when there is no record that coincides with the registration-requested membership information as a result of the searching; means for adding a service qualification to the user to enable the user to receive services of the service provision site when there is a record that coincides with the registration-requested membership information as a result of the searching; and means for posting the user ID and the password to the service provision site.

According to an embodiment of a fourth aspect of the present invention, there is provided a service provision site comprising: membership registration guidance display means for requesting a user to register membership information; means for guiding the user to obtain from a user terminal the membership information that has been input from the user terminal based on the guidance of the membership registration guidance display means; means for requesting an integrated membership management center to register the membership information; means for obtaining from the integrated membership management center the information about whether the requested membership information has already been registered in the integrated membership management center or the integrated membership management center has registered the requested membership information as new registration; and means for posting to the user terminal a user ID and a password that have been authenticated by the integrated membership management center, wherein the membership registration guidance display means requests the user to input items of membership information that are necessary for the integrated membership management center even if these pieces of information are not necessary for the service provision site.

Reference will now be made, by way of example, to the accompanying drawings, in which:
Fig. 1 is a system configuration diagram showing the relationship between a network structure and a database at each service provision site according to one embodiment of the present invention;
Fig. 2 is a table showing one example of membership information stored in databases 8 to 10 shown in Fig. 1;
Fig. 3 is a table showing display contents of membership registration guidance display means;
Fig. 4 is a block diagram for use in explaining a system (part 1) of integrated membership management according to the present embodiment.
Fig. 5 is a block diagram for use in explaining a system (part 2) of integrated membership management according to the present embodiment;
Fig. 6 is a diagram showing a control flow (part
1) between a user, a service provision site 5 of a service A, a service provision site 6 of a service B, and an integrated membership management center 7;
Fig. 7 is a diagram showing a control flow (part 2) that continues from Fig. 6;
Fig. 8 is a flowchart for use in explaining the processing for registering a membership at a service provision site;
Fig. 9 is a flowchart for use in explaining service provision at a service provision site, that is, the process for identifying a membership;
Fig. 10 is a diagram showing a screen displayed on a display unit at a user terminal when a user registers at a service provision site, and a shift of the screen (part 1) ;
Fig. 11 is a diagram showing a screen that continues from Fig. 10, and a shift of the screen (part 2); and
Fig. 12 is a flowchart for use in explaining searching logic at the integrated membership management center 7.

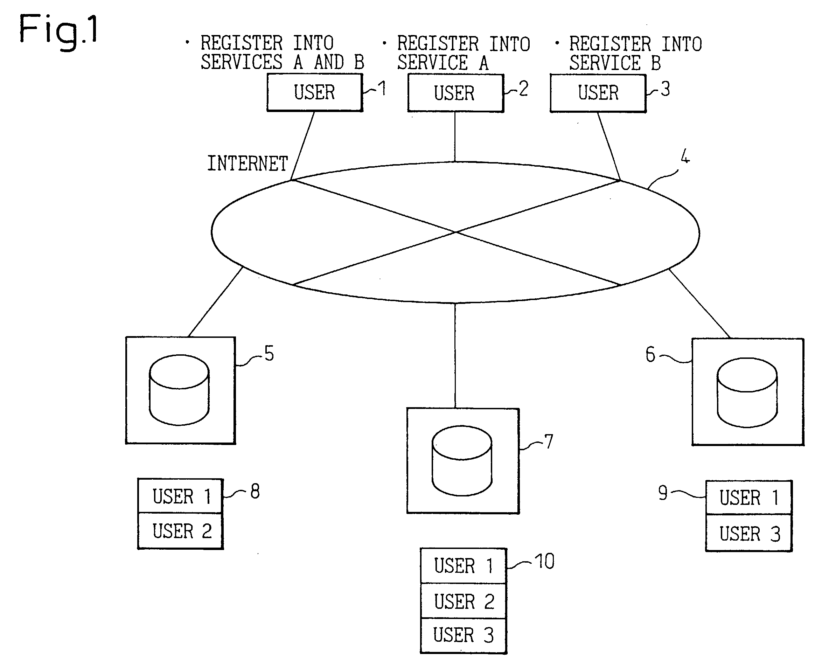

Fig. 1 is a system configuration diagram showing a relationship between a network structure and a database at each service provision site according to one embodiment of the present invention. In Fig. 1, reference numbers 1 to 3 denote users, 4 denotes the Internet, 5 denotes a service provision site of a service A, 6 denotes a service provision site of a service B, 7 denotes an integrated membership management center, and 8 denotes a database that is held by the service provision site 5. A reference number 9 denotes a database that is held by the service provision site 6, and 10 denotes a database that is held by the integrated membership management center 7.

The database 8 that is held by the service provision site 5 of the service A stores membership information of the user 1 and the user 2. The database 9 that is held by the service provision site 6 of the service B stores membership information of the user 1 and the user 3. Further, the database 10 that is held by the integrated membership management center 7 stores the membership information of all the users 1 to 3 that are connected to the Internet 4.

As explained above, as the integrated membership management center 7 stores and manages the membership information of all the users, each user can use the membership information common to all the service provision sites. Therefore, each user can easily manage a user ID and a password. Further, it becomes possible to provide an inquiry window for users to make inquiries about membership information and others at the integrated membership management center 7. Therefore, it is not necessary for each service provision site to have its own inquiry window.

Instead of the Internet 4, it is also possible to use any other optional network in an embodiment of the present invention.

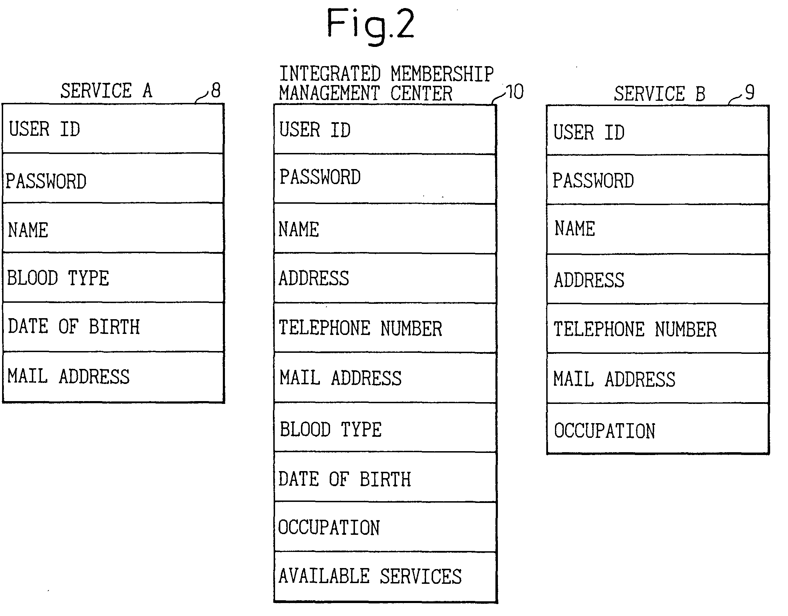

Fig. 2 is a table explaining one example of membership information stored in the databases 8 to 10 shown in Fig. 1. In Fig. 2, the database 8 that is held by the service provision site 5 for providing the service A and the database 9 that is held by the service provision site 6 for providing the service B both store a user ID, a password, a name and a mail address of each user respectively as the information common to both databases. In addition to these information items, the database 8 also stores a blood type and a date of birth as information necessary for the service provision site 5. While the blood type and the date of birth are not registered in the database 9, the database 9 additionally stores an address, a telephone number and an occupation as information necessary for the service provision site 6. As explained above, in general, the contents of information stored in the database are different for each service provision site.

According to an embodiment of the present invention, the database 10 that is held by the integrated membership management center 7 stores the information that is necessary for at least one service provision site among all the service provision sites that are connected to the Internet, and services that individuals can receive. In the database 10 of the integrated membership management center 7 shown in Fig. 2, there are registered the user ID, the password, the name and the mail address of each user as the information common to both the database 8 of the service A and the database 9 of the service B.
Further, in the database 10, there are registered the blood type and the date of birth as the information particular to the database 8 of the service A, and the address, the telephone number and the occupation as the information particular to the database 9 of the service B. Furthermore, in the database 10, there are registered the service A and the service B that the individuals can receive.

Based on the arrangement that the integrated membership management center 7 stores the information that is necessary for at least one service provision site among all the service provision sites connected to the Internet and the services that individuals can receive, each service provision site may receive only the information necessary for that service provision site from the integrated membership management center as explained in detail later.

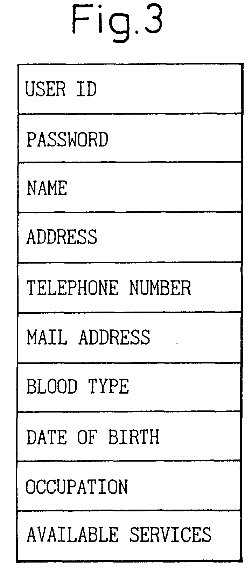

Fig. 3 is a table diagram showing one example of the display contents of the membership registration guidance display means held by the service provision site 5 shown in Fig. 1. As shown in Fig. 3, the items which are requested by the membership registration guidance display means are the same as those registered into the database 10 of the integrated membership management center. In other words, the membership registration guidance display means requests a user to input those items that are necessary for the integrated membership management center 7 even if these items are not necessary for the service provision site 5. Based on this arrangement, each service provision site can receive only the necessary information from the integrated membership management center, as explained with reference to Fig. 2.

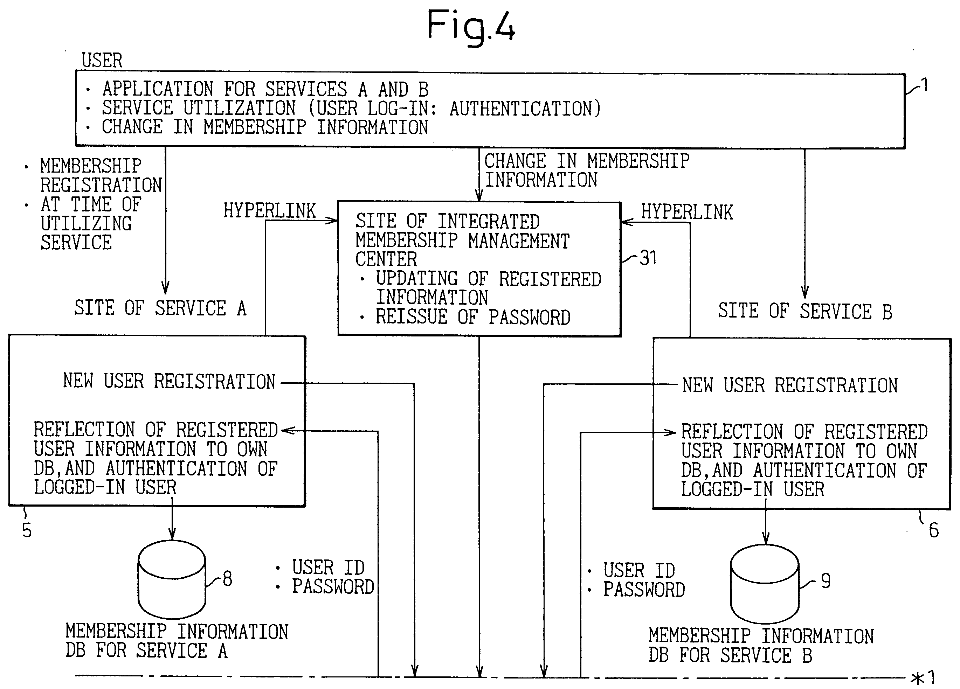

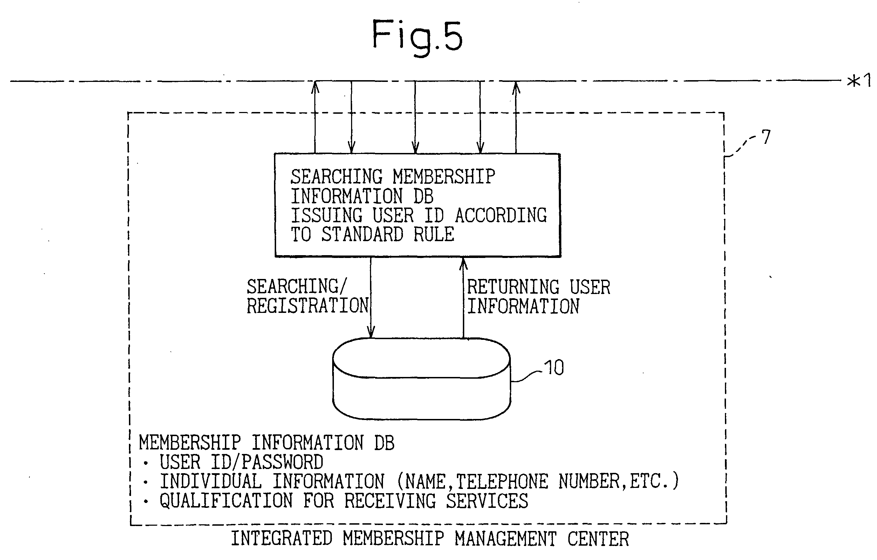

Fig. 4 and Fig. 5 are block diagrams for use in explaining a system of an integrated membership management according to the embodiment of the present invention. In these drawings, portions identical with those in Fig. 2 are attached with like reference numbers. The user 1 takes the following actions. The user 1 applies for a utilization of the service A or the service B. Then, the user 1 logs in to receive an authentication, and utilizes the service. The user 1 changes the membership information. The service provision site 5 or 6 takes the following actions. The service provision site registers a new user into the integrated membership management center 7. The service provision site stores the registered membership information in its own database, and authenticates the logged-in user. A site 31 of the integrated membership. management center updates registered information, and reissues a password. The integrated membership management center 7 retrieves the membership information of a user who has accessed the service provision site 5 or 6 from the membership information database 10. In the case of registering anew user, the integrated membership management center 7 stores the membership information into the database 10 according to a standard rule, and issues a user ID and a password.

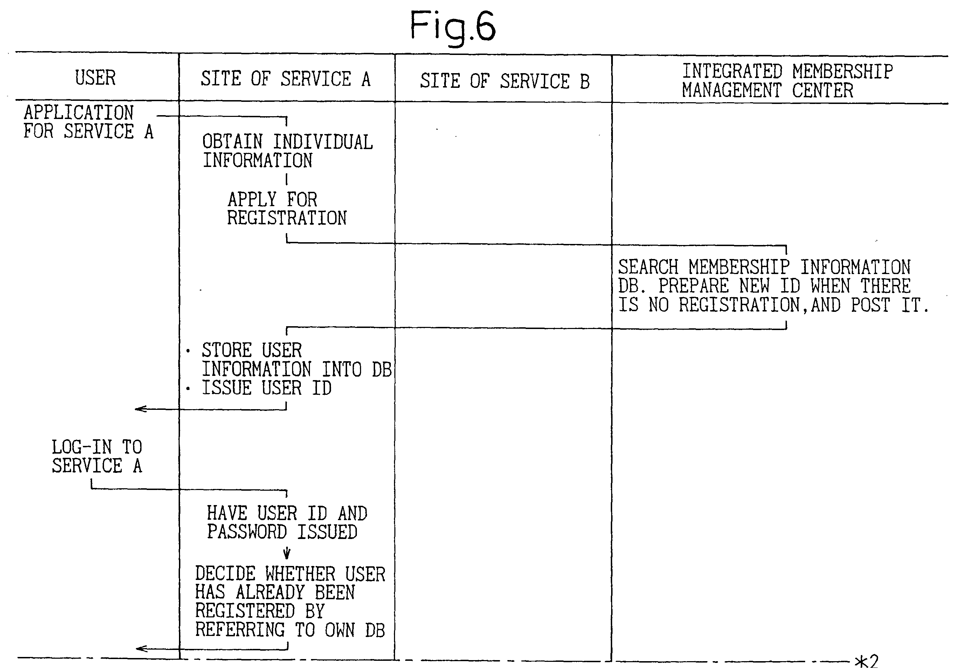

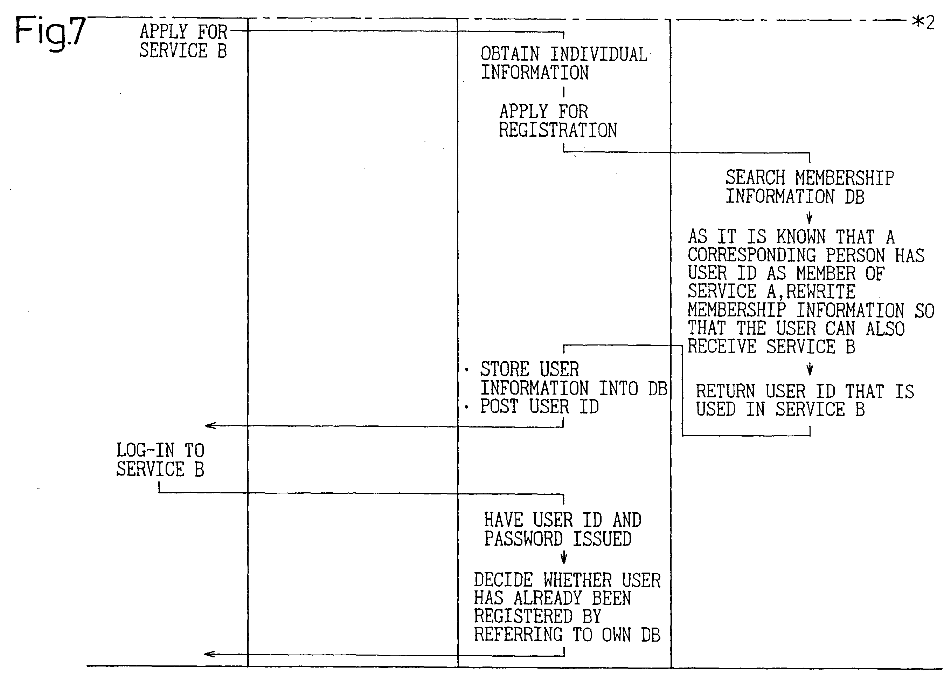

Fig. 6 and Fig. 7 are diagrams showing a control flow from the application for a service to a completion of log-in, between the user, the service provision site 5 of the service A, the service provision site 6 of the service B, and the integrated membership management center 7, according to the system shown in Fig. 4 and Fig. 5. Referring to Fig. 6, when the user has made an application for a service to the service provision site 5 of the service A, the service provision site 5 receives individual information, and applies for registration to the integrated membership management center 7. Upon receiving this application, the integrated membership management center 7 searches the database 10 (reference Fig. 1) to see whether the individual information obtained by the service provision site 5 is in the database 10 or not. When the individual information of the person concerned is not in the database 10, the integrated membership management center 7 prepares a new user ID, and posts this new user ID to the service provision site 5. The service provision site 5 stores the user ID posted from the integrated membership management center 7 into its own database 8, and at the same time, issues the user ID and the password to the user. Thus, the new registration of the user is completed.

Next, the user logs in the service provision site 5 of the service A, and inputs the user ID and the password. Then, the service provision site 5 receives the user ID and the password, and makes a decision as to whether this user has already been registered or not by referring to its own database 8. If the user has already been registered, the service provision site 5 authenticates the user so that the user can receive the service A.

Next, as shown in Fig. 7, when the user has made an application for a service to the service provision site 6 of the service B, the service provision site 6 receives individual information in a similar manner to that of the service A, and applies for registration to the integrated membership management center 7. Upon receiving this application, the integrated membership management center 7 searches the database 10 to see whether the individual information obtained by the service provision site 6 is in the database 10 or not. When the individual information of the person concerned coincides with the membership information in the database 10, this membership information can also be utilized in the service B. Therefore, this database 10 is rewritten. Next, the service provision site 6 returns the user ID that has been used in the service A to the service provision site 6. The service provision site 6 stores the user ID into its own database 9, and at the same time, posts the user ID and the password to the user.

Next, the user logs in the service provision site 6 of the service B, and inputs the user ID and the password. Then, the service provision site 6 receives the user ID and the password, and makes a decision as to whether this user has already been registered or not by referring to its own database 9. If the user has already been registered, the service provision site 6 authenticates the user so that the user can receive the service B.

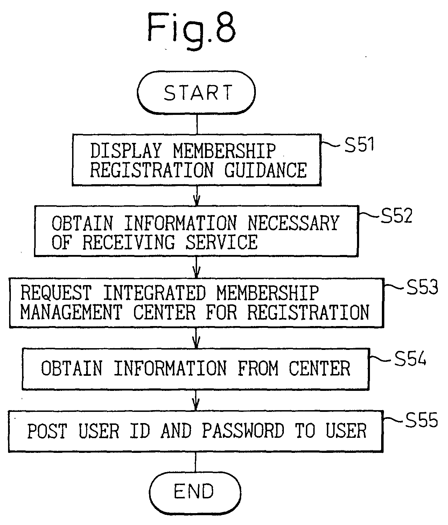

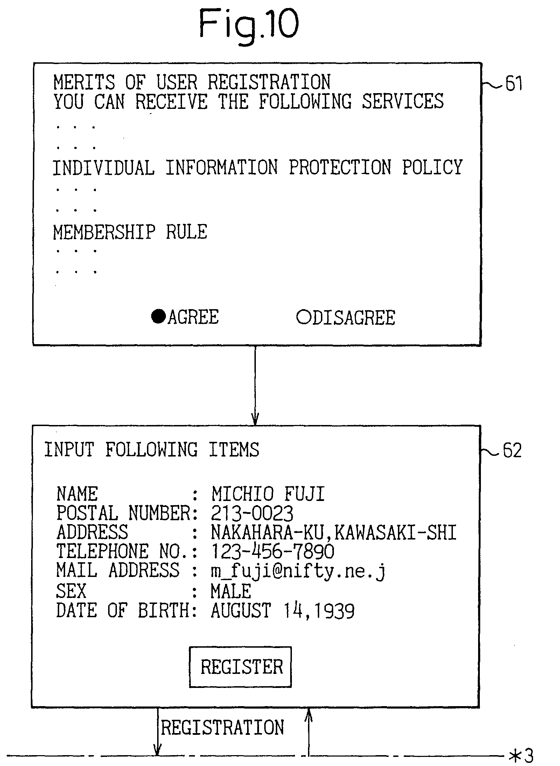

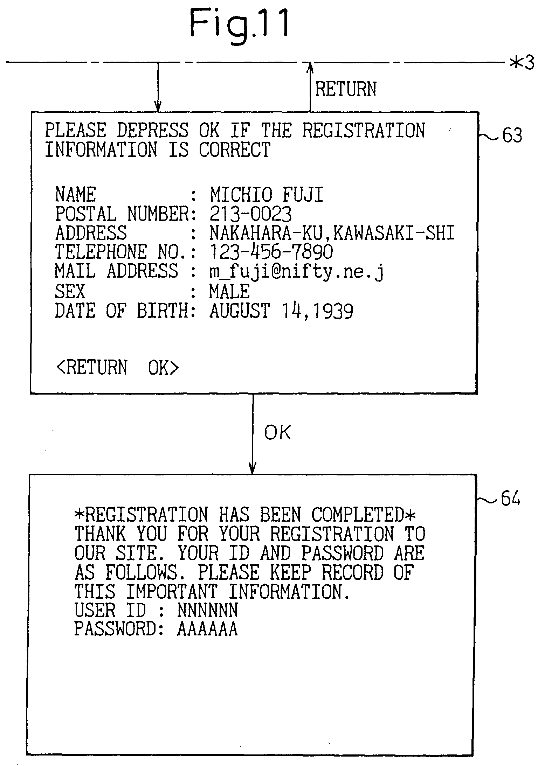

Fig. 8 is a flowchart for use in explaining the processing for registering a membership at a service provision site. Referring to Fig. 8, at step S51, a membership registration guidance is displayed on a display unit at a user terminal. Fig. 10 and Fig. 11 show screens displayed on the display unit at the user terminal when the user registers at the service provision site, and a shift of the screens. The screen of the membership registration guidance displays an individual information protection policy, a membership rule and the like as shown on a screen 61 in Fig. 10. When the user agrees to the policy, the rule and the like, the screen shifts to a screen 62. At step S52 in Fig. 8, the user obtains information necessary for receiving the service. In this case, the user inputs the name, the postal number, the address, the telephone number, the mail address, the sex, the date of birth, etc., and then depresses a registration button. Then, a screen 63 is displayed. If the registered information is correct, the user depresses OK.

Next, at step S53, the service provision site requests the integrated membership management center 7 to register the individual information. Then, at step S54, the service provision site obtains a user ID and a password included in the individual information from the integrated membership management center 7, regardless of whether the individual information has already been registered or the individual information is a new registration. At step S55, the service provision site posts the user ID and the password to the user. At this time, a screen 64 is displayed.

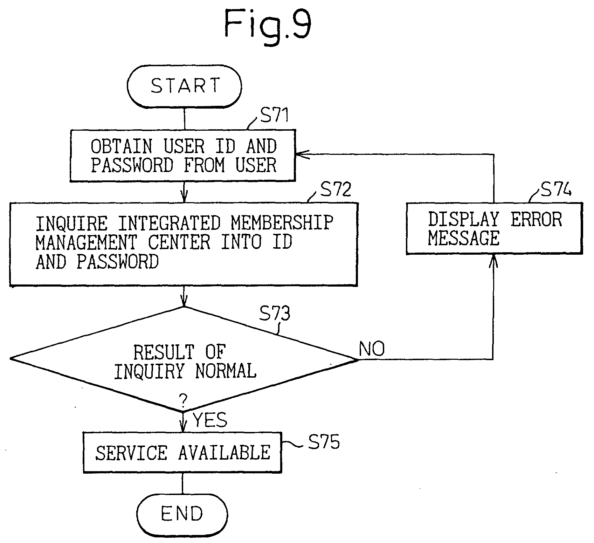

Fig. 9 is a flowchart for use in explaining service provision at a service provision site, that is, the process for identifying a membership. Referring to Fig. 9, at step S71, a service provision site obtains a user ID and a password from a user. At step S72, the service provision site inquires the database 8 or 9 of the service provision site into the user ID and the password. When a result of the inquiry is not normal at step S73, that is, when the user ID and the password do not exist in the database 8 or 9 held by the service provision site, an error message is displayed at step S74, and the process returns to step S71. When the input user ID and password coincide with the information within the database 8 or 9, a decision is made that it is possible to provide the service at step S75.

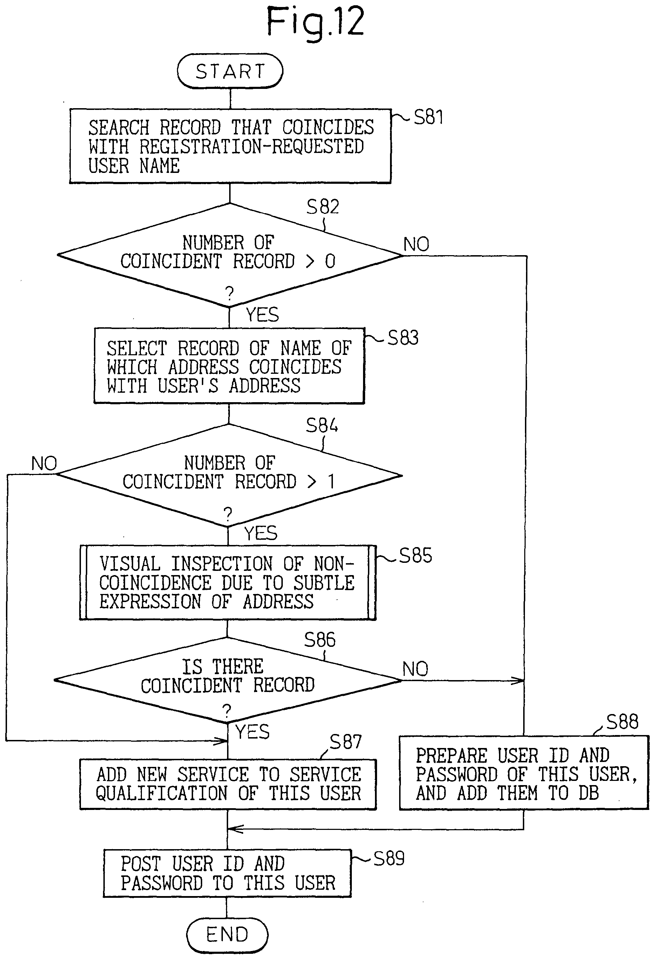

Fig. 12 is a flowchart for use in explaining a searching logic at the integrated membership management center 7. Referring to Fig. 12, at step S81, the integrated membership management center 7 searches for a record that coincides with a registration-requested user name in the database 10. At step S82, when the number of records that coincide with the registration-requested user name is larger than zero, at step S83, the integrated membership management center 7 selects a name of which the address coincides with the address of the registration-requested user from the database of the integrated membership management center 7. In this case, the condition for coincidence is not the whole character string of the address, but covers the name of the prefecture, the name of the city and the name of the town. Next, at step S84, when the number of records that coincide with the name and the address is larger than one, at step S85, the non-coincidence due to a subtle difference in the expression of the address is visually inspected. At step S86, when a record that correctly coincides is found, a new service is added to the service qualification of the corresponding user. When the number of the coincident record is not larger than one as a result of the decision made at step S84, this means that the number of records that coincide is one. Therefore, in this case too, a new service is added to the service qualification of the corresponding user, at step S87. When the number of coincident record is not larger than zero as a result of the decision made at step S82, this means that there is no coincident record. Therefore, at step S88, the integrated membership management center 7 newly prepares a user ID and a password for the corresponding user, and adds these to the database 10. At step S89, after step S87, or after step S88, the integrated membership management center 7 posts the user ID and the password of the user to the corresponding user via the service provision site.

According to an embodiment of the present invention, a user can receive services from many service provision sites by using one user ID. Therefore, it is possible to simplify the user's management of user IDs and passwords. Further, it is possible to reduce the membership management cost at each service provision site in the provision of services including online sales on the Internet and to improve the convenience of users who receive those services.

## Claims

1. A membership management method in a membership management system comprising at least one user terminal connected via a network, a database held by each of a plurality of service provision sites, and a database held by an integrated membership management center, wherein when a user makes an application for a registration of membership information to one service provision site by using said user terminal, the application-requested service provision site registers at least a part of the membership information into a database held by the service provision site, and when this membership information has not yet been registered in a database held by the integrated membership management center, the integrated membership management center also registers this membership information into the database held by the integrated membership management center.

2. A membership management system comprising at least one user terminal connected via a network, a database held by each of a plurality of service provision sites, and a database held by an integrated membership management center, wherein each service provision site comprises: membership registration guidance display means for requesting a user to register membership information; means for guiding the user to obtain from a user terminal the membership information that has been input from the user terminal based on the guidance of the membership registration guidance display means; means for requesting the integrated membership management center to register the membership information; means for obtaining from the integrated membership management center the information about whether the requested membership information has already been registered in the integrated membership management center or the integrated membership management center has registered the requested membership information as new registration; and means for posting to the user terminal a user ID and a password that have been authenticated by the integrated membership management center.

3. The membership management system according to Claim 2, wherein the integrated membership management center comprises: means for searching for a record that coincides with user information when this means has received from a service provision site a request for registering membership information; means for preparing a user ID and a password and adding these to a database when there is no record that coincides with the registration-requested membership information as a result of the searching; means for adding a service qualification to the user to enable the user to receive services of the service provision site when there is a record that coincides with the registration-requested membership information as a result of the searching; and means for posting the user ID and the password authenticated by the integrated membership management center to the service provision site.

4. The membership management system according to Claim 2, wherein the membership registration guidance display means requests a user to input items of membership information that are necessary for the integrated membership management center even if these pieces of information are not necessary for the service provision site.

5. An integrated membership management center that is connected to a plurality of service provision sites and to at least one user terminal via a network, the integrated membership management center comprising a database for registering new membership information that a user has used when the user has accessed a service provision site from a user terminal.

6. The integrated membership management center according to Claim 5, further comprising: means for searching for a record that coincides with user information when this means has received from a service provision site a request for registering membership information; means for preparing a user ID and a password and adding these to a database when there is no record that coincides with the registration-requested membership information as a result of the searching; means for adding a service qualification to the user to enable the user to receive services of the service provision site when there is a record that coincides with the registration-requested membership information as a result of the searching; and means for posting the user ID and the password to the service provision site.

7. A service provision site comprising:
membership registration guidance display means for requesting a user to register membership information; means for guiding the user to obtain from a user terminal the membership information that has been input from the user terminal based on the guidance of the membership registration guidance display means; means for requesting an integrated membership management center to register the membership information; means for obtaining from the integrated membership management center the information about whether the requested membership information has already been registered in the integrated membership management center or the integrated membership management center has registered the requested membership information as new registration; and means for posting to the user terminal a user ID and a password that have been authenticated by the integrated membership management center, wherein the membership registration guidance display means requests the user to input items of membership information that are necessary for the integrated membership management center even if these pieces of information are not necessary for the service provision site.
